# EUROPÄISCHE PATENTANMELDUNG

(11) **EP 0 703 130 A2**
(43) Veröffentlichungstag der Anmeldung: **27.03.1996**
(21) Anmeldenummer: 95114805.5
(22) Anmeldetag: 20.09.1995
(51) Int. Cl.: B60T 1/06

(54) **Anordnung zum Halten einer Radfelge**

(30) Priorität: 21.09.1994 DE 4433743
(71) Anmelder: PERROT BREMSEN GmbH, D-68229 Mannheim (DE)
(72) Erfinder: Rupprecht, Bernd, D-68535 Edingen-Neckarhausen (DE); Antony, Paul, Dipl.-Ing., D-67550 Worms (DE); Jäger, Hellmut, Dipl.-Ing., D-68535 Edingen-Neckarhausen (DE)
(74) Vertreter: Patentanwälte Leinweber & Zimmermann

(57) **Zusammenfassung**

Es werden Anordnungen zum Halten einer Radfelge eines Rades mit Scheibenbremse beschrieben.

Bei der ersten Lösung ist die Radfelge (15) an einem zentralen Bauelement (11) befestigt, was ein Entfernen der Radfelge zum Warten der Scheibenbremse (2) möglich macht, ohne daß die sonst üblichen Radbolzen (17) gelöst werden müßten.

Bei der zweiten Lösung dient das zentrale Bauelement zum Halten der Radfelge in Eingriff mit einer Einrichtung zum Fixieren der Radfelge bezüglich der Nabe in Umfangsrichtung.

Die dritte Lösung stellt eine Weiterentwicklung der ersten Lösung dar. Dabei ist die Nabe einstückig mit dem zentralen Bauelement ausgeführt.

## Beschreibung

Die Erfindung betrifft eine Anordnung zum Halten einer Radfelge eines Rades mit Scheibenbremse.

Eine solche Anordnung ist beispielsweise aus der DE-25 38 017 A1 bekannt. Dabei ist auf einem nicht drehbaren Achsstummel mittels eines Lagers eine drehbare Nabe positioniert. An einem ersten Nabenbereich ist mittels Schrauben eine Bremsscheibe befestigt, während an einem zweiten Nabenbereich, einem Flanschabschnitt, mittels gewindetragenden Radbolzen und Muttern eine Radfelge befestigt ist. Bei der bekannten Anordnung befinden sich solcherlei aus Radbolzen und Muttern bestehende Befestigungen der Radfelge in beliebiger Anzahl auf einem Lochkreis. Während eine die Bremsscheibe übergreifende Scheibenbremse ortsfest am Achsstummel befestigt ist, sind die Bremsscheibe und die Radfelge gemeinsam mit der Nabe drehbar. Die axiale Halterung dieser drehbaren Teile sowie die Einstellung des Lagerspiels erfolgt durch eine Verschraubung endseitig des Achsstummels.

Fig. 1 des DE 94 06 166 U1 zeigt eine Scheibenbremse, die an einem Achsbereich drehfest gehalten ist, wohingegen eine Nabe drehbar an dem genannten Achsbereich gehalten ist. Die Nabe trägt an entsprechend ausgebildeten Flanschbereichen sowohl eine Bremsscheibe als auch die Radfelge. Zur Befestigung der Radfelge dienen wiederum Radbolzen. Selbstverständlich sind auch hier Lagerungen zwischen dem Achsbereich und der Nabe vorgesehen. Diese Lagerungen sind jedoch nicht gezeigt.

Bei Anordnungen der eingangs genannten Art muß für einen freien Zugang zur Scheibenbremse - beispielsweise bei Wartungsarbeiten - die Radfelge vom Achsbereich abgezogen werden. Bei dem vorstehend beschriebenen bekannten Anordnungen ist es dazu erforderlich, sämtliche Verbindungen - also alle Radbolzen - zwischen der Nabe und der Radfelge zu entfernen. Dieses Erfordernis ergibt sich aus der Tatsache, daß ein Abziehen der Radlagerung mit der Bremsscheibe nicht möglich ist, weil die Scheibenbremse die Bremsscheibe üblicherweise übergreift.

Der Erfindung liegt mithin die Aufgabe zugrunde, eine Anordnung der eingangs genannten Art derart auszugestalten, daß ein schneller Radabbau bzw. -anbau für Wartungsarbeiten und dergleichen an der Scheibenbremse möglich ist. Dabei soll weitestgehend eine Abänderung gebräuchlicher Felgenausführungen vermieden werden.

Nach einem ersten Aspekt geht die Erfindung von der eingangs genannten Anordnung zum Halten einer Radfelge an einer Nabe mit Scheibenbremse aus. Die Aufgabe wird dabei durch ein zentrales Bauelement gelöst, an dem die Radfelge axial und in Umfangsrichtung fixiert angebracht ist, wobei das zentrale Bauelement seinerseits axial und in Umfangsrichtung fixiert an der Nabe angebracht ist.

Nach einem zweiten Aspekt geht die Erfindung von einer Anordnung zum Halten einer Radfelge an einer Nabe mit Scheibenbremse aus, und zwar mit einer ersten Einrichtung zum Fixieren der Radfelge bezüglich der Nabe in Axialrichtung und einer zweiten Einrichtung zum Fixieren der Radfelge bezüglich der Nabe in Umfangsrichtung. Die Lösung der vorstehenden Aufgabe erfolgt dabei dadurch, daß die erste Einrichtung ein zentrales Bauelement beinhaltet, das die Radfelge in Axialrichtung in Eingriff mit der zweiten Einrichtung hält.

Nach einem dritten Aspekt geht die Erfindung von einer Anordnung zum Halten einer Radfelge eines Rades mit Scheibenbremse aus, bei der einerseits die Radfelge drehfest und axial unverschieblich und andererseits die Scheibe der Scheibenbremse drehfest und axial unverschieblich an einem zentralen Bauelement angebracht sind. Zur Lösung der obigen Aufgabe beinhaltet die Anordnung in diesem Fall eine Axialverzahnung zwischen der Scheibe und dem zentralen Bauelement zur Drehsicherung, eine erste Axialsicherungseinrichtung zum Sichern der Scheibe gegen eine Axialverschiebung in Richtung der Radfelge und eine zweite Axialsicherungseinrichtung zum Sichern der Scheibe gegen eine Axialverschiebung der Scheibe weg von der Radfelge.

Bei allen drei Aspekten der Erfindung wird von folgendem gemeinsamen Lösungsprinzip Gebrauch gemacht: In allen Fällen ist die Radfelge derart angebracht, daß sie zumindest axial von der Achse abziehbar ist, ohne daß üblicherweise in großer Zahl vorgesehene Radbolzen gelöst werden müßten. Vielmehr muß jeweils nur das zentrale Bauelement gelöst werden. "Zentral" ist dabei nicht unbedingt im örtlichen Sinne zu verstehen. Vielmehr ist damit gemeint, daß es sich um ein Bauelement handelt, das im Gegensatz zu der Vielzahl Radbolzen die vielen Einzelhalterungen in sich allein vereinigt. Dadurch wird der An- und Abbau der Radfelge erheblich vereinfacht. Darüber hinaus bedarf es nicht mehr der nach Lösen der Radbolzen üblicherweise erforderlichen Neuzentrierung und -einstellung. Ferner bedarf es bei der Lösung nach allen drei Aspekten keiner grundlegenden Änderung der Radfelgenausgestaltung. Vielmehr können herkömmliche Radfelgen weiterhin verwendet werden.

Bei der Lösung nach dem ersten Aspekt können Radbolzen zum Befestigen der Radfelge an dem zentralen Bauelement dienen. Mithin wird die Radfelge mittels der herkömmlicherweise bereits üblichen Radbolzen befestigt, nur erfolgt die Befestigung erfindungsgemäß an dem zentralen Bauelement und nicht, wie herkömmlich, an der Nabe.

Erfindungsgemäß kann es der Stabilität dienlich sein, wenn das zentrale Bauelement bei der Lösung nach dem ersten Aspekt an einem Nabenflansch anliegt.

Ferner kann bei der Lösung nach dem ersten Aspekt eine Axialverzahnung zum Fixieren des zentralen Bauelements bezüglich der Nabe in Umfangsrichtung vorgesehen sein. Eine solche Axialverzahnung macht den Gesamtaufbau sehr einfach.

Bei der Lösung nach dem zweiten Aspekt kann die zweite Einrichtung mindestens einen Radbolzen beinhalten, der in eine entsprechende Öffnung der Radfelgen eingreift. Dadurch werden wiederum die aus herkömmlichen Anordnungen bekannten Radbolzen weiterhin verwendet. Eine Umgestaltung der Radfelgen ist mithin nicht erforderlich. Die Öffnung muß allerdings keine Durchgangsöffnung sein.

Zur Erhöhung der Stabilität kann nach dem zweiten Aspekt ferner vorgesehen sein, daß das zentrale Bauelement die Radfelge axial gegen einen Nabenflansch vorspannt.

Bevorzugt dient nach dem zweiten Aspekt ein Radbolzen zur Befestigung der Bremsscheibe an der Nabe. Wiederum wird also auf herkömmlich üblicherweise verwendete Teile zurückgegriffen. Sofern der Radbolzen auch gleichzeitig Teil der vorgenannten zweiten Einrichtung ist, werden durch diese Ausgestaltung Teile eingespart.

Bei dem ersten und dem zweiten Aspekt der Erfindung kann eine Verschraubeinrichtung zum axialen Fixieren und/oder Vorspannen des zentralen Bauelements auf der Nabe dienen. Eine solche Verschraubeinrichtung ist besonders einfach zu realisieren.

Aus Sicherheitsgründen kann dabei eine Einrichtung zum Sichern der Verschraubeinrichtung gegen unbeabsichtigtes Lösen vorgesehen sein.

Auch kann bei dem ersten und dem zweiten Aspekt der Erfindung vorgesehen sein, daß die Bremsscheibe und die Nabe einstückig miteinander ausgeführt sind.

Bei der Lösung nach dem dritten Aspekt der Erfindung kann die erste Axialsicherungseinrichtung eine Anlagefläche an dem zentralen Bauelement beinhalten.

Ferner kann die zweite Axialsicherungseinrichtung eine Anlagefläche an einem Drehlager auf einer Achse des Rades beinhalten.

Die zweite Axialsicherungseinrichtung kann aber auch eine Anlagefläche an dem zentralen Bauelement beinhalten. Dazu kann ein Anschlag vorgesehen sein, der mit dem zentralen Bauelement verschraubbar ist. Es kann aber auch ein Sicherungsring vorgesehen sein, der lösbar auf dem zentralen Bauelement sitzt.

Schließlich kann eine Axialverschraubung zum drehbaren Halten des zentralen Bauelementes vorgesehen sein.

Nachstehend ist die Erfindung anhand bevorzugter Ausführungsbeispiele unter Bezugnahme auf die beiliegende Zeichnung mit weiteren Einzelheiten näher erläutert. Dabei zeigen:
- Fig. 1: eine Schnittansicht durch eine Ausführung der erfindungsgemäßen Anordnung nach dem ersten Aspekt der Erfindung,
- Fig. 2: eine Schnittansicht durch eine Ausführung der erfindungsgemäßen Anordnung nach dem zweiten Aspekt der Erfindung und
- Fig. 3 und 4: Schnittansichten durch zwei Ausführungen der erfindungsgemäßen Anordnung nach dem dritten Aspekt der Erfindung.

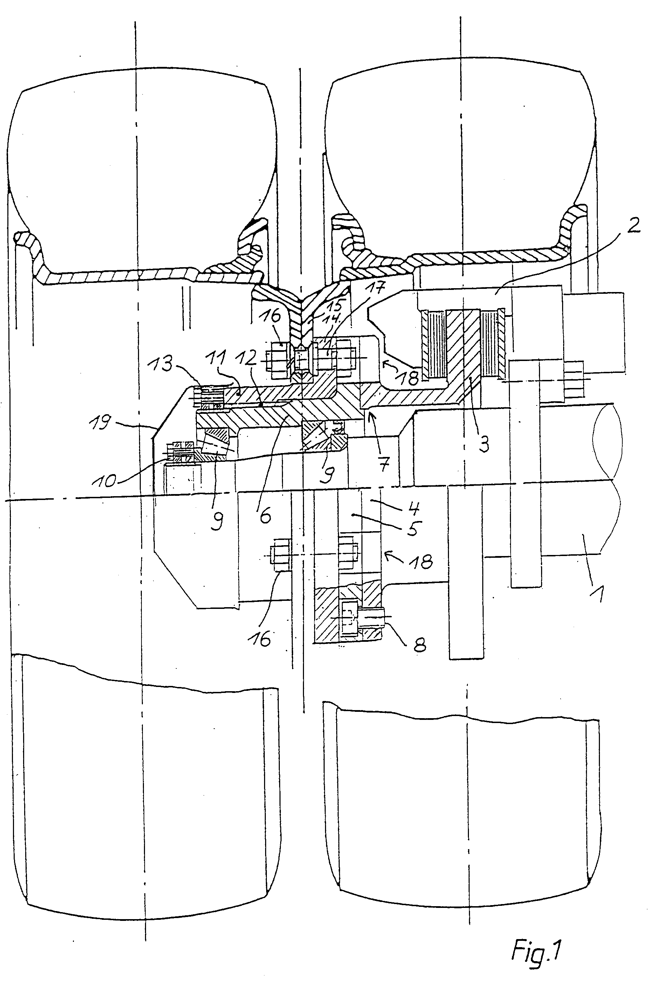

Fig. 1 zeigt ein Achsende oder Trageteil 1 einer Radbefestigung, zu dem eine Scheibenbremse 2 parallel angeordnet ist. Die Scheibenbremse 2 kann dabei direkt an dem Achsende 1 angeordnet sein, und zwar bei einer nicht angetriebenen Achse. Bei einer angetriebenen Achse (Welle) ist die Scheibenbremse 2 an einem beliebigen Fahrzeugteil befestigt. Die Scheibenbremse 2 umgreift mit ihren beiden Sattelschenkeln eine Bremsscheibe 3, die mit einem Scheibenflansch 4 an einem Nabenflansch 5 der Nabe 6 anliegt. Zur radialen und axialen Festlegung des Scheibenflansches 4 und des Nabenflansches 5 zueinander dient ein Zentrierbund 7. Befestigungsschrauben 8 dienen zur drehfesten Verbindung der Bremsscheibe 3 mit der Nabe 6.

Zwischen dem Achsende 1 und der Nabe 6 sind Lager 9 bekannter Bauart angeordnet, wobei zur axialen Festlegung sowohl der Lager 9 als auch der Nabe 6 eine Axialverschraubung 10 dient, die sich endseitig am Achsende 1 befindet.

Auf der Nabe 6 ist ein als Halteflansch 11 ausgebildetes zentrales Bauelement angeordnet, wobei zwischen beiden Teilen eine Axialverzahnung 12 vorgesehen ist, um eine drehfeste, jedoch axial lösbare Verbindung zwischen diesen beiden Teilen herzustellen. Selbstverständlich kann die Halterung des Halteflansches 11 auf der Nabe 6 beliebiger Kontur sein, solange ein Kraftschluß in Drehrichtung und die genannte Lösbarkeit gewährleistet sind. Ferner ist endseitig zwischen der Nabe 6 und dem Halteflansch 11 eine Axialverschraubung 13 vorgesehen, mit der der Halteflansch 11 gegen den Nabenflansch 5 vorgespannt ist. Auch hier gilt, daß die axiale Festlegung des Halteflansches 11 auf der Nabe 6 beliebig ausgestaltet sein kann.

So kann beispielsweise vorgesehen sein, daß der zur Verschraubung 13 weisende Teil des Halteflansches 11 sich in Form eines Bundes radial einwärts in Richtung des Lagers 9 erstreckt, wobei unter Zwischenfügung von erforderlichen Dreh- und Haltemitteln mit nur einer Axialverschraubung sowohl das Lager 9 als auch der Halteflansch 11 in Axialrichtung festgelegt werden können.

Das sich zur Bremsscheibe 3 hin erstreckende Ende des Halteflansches 11 weist einen Radialbereich 14 auf, gegen den sich in der Zeichnung zwei Radfelgen 15 axial abstützen. Selbstverständlich ist die Lösung auch bei nur einer Radfelge anwendbar. Die radiale Zentrierung der Radfelge 15 erfolgt ebenfalls auf dem Halteflansch 11.

Zur drehfesten, jedoch axiale lösbaren Halterung der Radfelge 15 an dem Halteflansch 11 dienen auf einem Lochkreis angeordnete Radbolzen 17 mit Radmuttern 16. Zur Durchführung der Radbolzen 17 weisen der Scheibenflansch 4 und der Nabenflansch 5 Durchgangsöffnungen 18 auf, wodurch einerseits eine Befestigung der Radbolzen 17 an dem Radialbereich 14 und andererseits eine Festlegung der Radfelge 15 auf den Radbolzen 17 mittels der Radmuttern 16 möglich ist.

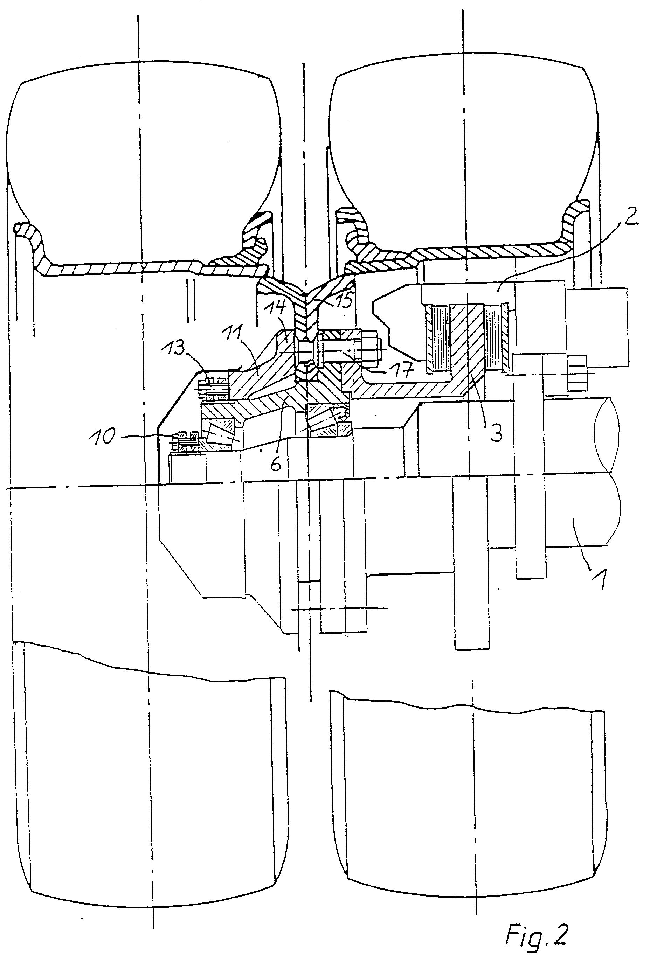

Fig. 2 zeigt eine andere Ausbildung des als Halteflansch 11 ausgebildeten zentralen Bauelements. Dabei wird der Radialbereich 14 des Halteflansches 11 axial mittels der Axialverschraubung 13 gegen die Radfelge 15 vorgespannt, was Radmuttern überflüssig macht. Die Zentrierung der Radfelge 15 auf der Nabe 6 erfolgt hier nur mittels der Radbolzen 17. Ferner kann die nach Fig. 1 noch erforderliche Halterung der Bremsscheibe 3 an der Nabe 6 mittels der zusätzlichen Schrauben 8 entfallen, weil diese Halterung bei der Lösung nach Fig. 2 durch die Radbolzen 17 erfolgt.

Selbstverständlich ist es bei den Ausführungen nach den Figuren 1 und 2 möglich, die Bremsscheibe 3 und die Nabe 6 einstückig miteinander auszuführen, wobei die erforderlichen Lager- und Befestigungsbereiche beibehalten werden.

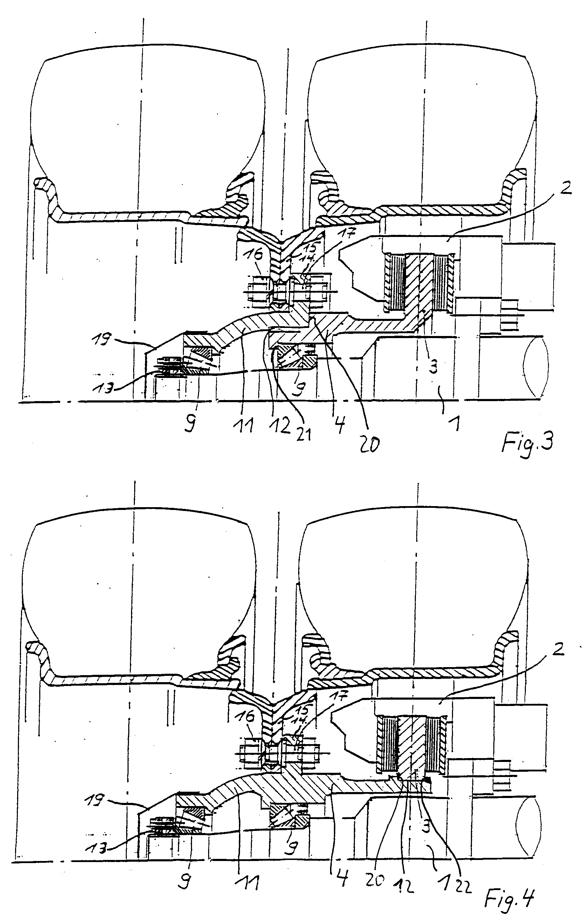

In den Fig. 3 und 4 sind Ausführungsformen der Erfindung nach dem dritten Lösungsaspekt gezeigt. Diese Ausführungsformen stellen jeweils Abwandlungen des ersten Lösungsaspektes der Erfindung dar, dem die Ausführungsform nach Fig. 1 entspricht. Daher werden im nachfolgenden nur noch solche Einzelheiten erläutert, die die Fig. 3 und 4 von der Fig. 1 unterscheiden.

Der Hauptunterschied der Ausführungsformen nach den Fig. 3 und 4 im Vergleich mit der Ausführungsform nach Fig. 1 liegt darin, daß im Falle der Fig. 3 und 4 die beiden in Fig. 1 gezeigten Elemente 6 und 11 zu einem einzigen, wiederum als Halteflansch bezeichneten Element 11 verschmolzen sind.

Gemäß Fig. 3 drückt der Halteflansch 11 den Scheibenflansch 4 mittels einer Anlagefläche 2O axial gegen ein Lager 9 mit einer Anlagefläche 21. Dadurch ist der Scheibenflansch 4 und damit die Scheibe 3 axial sicher gehalten.

Zur Drehkopplung der Scheibe 3 mit dem Halteflansch 11 dient eine Axialverzahnung 12.

Bei der Ausführung nach Fig. 4 ist auch der Scheibenflansch 4 mit in den Halteflansch 11 einbezogen. Dabei ist zwischen der Scheibe 3 und dem Scheibenflansch 4 die Axialverzahnung 12 vorgesehen.

Zur Sicherung gegen eine Axialverschiebung dient wiederum die Anlagefläche 2O an dem Halteflansch 11. Ferner ist eine weitere Anlagefläche 22 vorgesehen, die der erstgenannten Anlagefläche 2O gegenüberliegt.

Die Anlagefläche 2O kann an einem Absatz des Halteflansches 11 ausgebildet sein. Die Anlagefläche 22 gehört bei dem in Fig. 4 gezeigten Ausführungsbeispiel zu einem Sicherungsring. Anstelle des Sicherungsrings kann aber auch eine auf den Halteflansch 11 bzw. den Nabenflansch 4 aufgeschraubte Schraube vorgesehen sein, die dann die Anlagefläche 22 trägt.

Insbesondere bei der Lösung nach Fig. 3 sollte möglichst wenig Spiel zwischen dem Halteflansch 4 und dem Achsende 1 vorhanden sein, damit die Bremsscheibe 3 bei einem Entfernen des Haltflansches 11 nicht gegenüber der tragenden Lagerung 9 kippen kann. Dadurch kann das Achsende 1 bei Montagearbeiten als Stützbereich dienen.

Die Lösung nach Fig. 4 hat insbesondere den Vorteil, daß die Teilezahl minimiert ist.

Bei allen Lösungen ist eine Schraube, ein Splint oder dgl. vorgesehen, um die Verschraubung 13 gegen unbeabsichtigtes Lösen zu sichern.

Ferner ist bei allen Lösungen eine Abdeckung 19 vorgesehen, um die Axialverschraubungen 10 bzw. 13 gegen Verschmutzung zu schützen.

Bei allen Lösungen ist der freie Zugang zur Scheibenbremse denkbar einfach. Dafür wird nach der Abdeckung 19 nur die Axialverschraubung 13 bzw. 1O gelöst, wodurch der Halteflansch 11 abgezogen werden kann. Bei der Lösung nach den Fig. 1, 3 und 4 wird mit dem Halteflansch 11 gleich die Radfelge 15 entfernt, woraufhin die Scheibenbremse freiliegt. Bei der Lösung nach Fig. 2 kann die Radfelge 15 nach Abziehen des Halteflanschen 11 ebenfalls abgezogen werden. In allen Fällen ist ein Lösen der Radbolzen nicht erforderlich.

Die übrigen Teile bleiben ortsfest auf dem Achsende 1 gehaltert. Der freie Zugang zur Scheibenbremse ist mithin mit einfachen Mitteln gewährleistet.

Wie bereits oben erwähnt, sind alle genannten Lösungen für Radfelgen für Zwillings- oder Einfachbereifungen geeignet.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### BEZUGSZEICHENLISTE

- 1: Achsenende
- 2: Scheibenbremse
- 3: Bremsscheibe
- 4: Scheibenflansch
- 5: Nabenflansch
- 6: Nabe
- 7: Zentrierbund
- 8: Befestigungsschraube
- 9: Lagerung
- 10: Axialverschraubung
- 11: Halteflansch
- 12: Axialverzahnung
- 13: Axialverschraubung
- 14: Radialbereich
- 15: Radfelge
- 16: Radmutter
- 17: Radbolzen
- 18: Durchgangsöffnung
- 19: Abdeckung
- 2O: Anlagefläche
- 21: Anlagefläche
- 22: Anlagefläche

## Patentansprüche

1. Anordnung zum Halten einer Radfelge (15) an einer Nabe (6) mit Scheibenbremse (2, 3),
gekennzeichnet durch
ein zentrales Bauelement (11), an dem die Radfelge (15) axial und in Umfangsrichtung fixiert angebracht ist,
wobei das zentrale Bauelement (11) seinerseits axial und in Umfangsrichtung fixiert an der Nabe (6) angebracht ist.

2. Anordnung nach Anspruch 1, dadurch gekennzeichnet, daß Radbolzen (17) zum Befestigen der Radfelge (15) an dem zentralen Bauelement (11) dienen.

3. Anordnung nach Anspruch 1 oder 2, dadurch gekennzeichnet, daß das zentrale Bauelement (11) an einem Nabenflansch (5) anliegt.

4. Anordnung nach einem der vorangehenden Ansprüche, gekennzeichnet durch eine Axialverzahnung (12) zum Fixieren des zentralen Bauelements (11) bezüglich der Nabe (6) in Umfangsrichtung.

5. Anordnung zum Halten einer Radfelge (15) an einer Nabe (6) mit Scheibenbremse (2, 3),
mit einer ersten Einrichtung (11, 13) zum Fixieren der Radfelge (15) bezüglich der Nabe (6) in Axialrichtung und
einer zweiten Einrichtung (17) zum Fixieren der Radfelge (15) bezüglich der Nabe (6) in Umfangsrichtung,
dadurch gekennzeichnet, daß
die erste Einrichtung (11, 13) ein zentrales Bauelement (11) beinhaltet, das die Radfelge (15) in Axialrichtung in Eingriff mit der zweiten Einrichtung (17) hält.

6. Anordnung nach Anspruch 5, dadurch gekennzeichnet, daß die zweite Einrichtung mindestens einen Radbolzen (17) beinhaltet, der in eine entsprechende Öffnung der Radfelge (15) eingreift.

7. Anordnung nach Anspruch 5 oder 6, dadurch gekennzeichnet, daß das zentrale Bauelement (11) die Radfelge (15) axial gegen einen Nabenflansch (5) vorspannt.

8. Anordnung nach Anspruch 5, 6 oder 7, dadurch gekennzeichnet, daß mindestens ein Radbolzen (17) zur Befestigung der Bremsscheibe (3) an der Nabe (6) dient.

9. Anordnung nach einem der vorangehenden Ansprüche, gekennzeichnet durch eine Verschraubeinrichtung (13) zum axialen Fixieren und/oder Vorspannen des zentralen Bauelements (11) auf der Nabe (6).

10. Anordnung nach Anspruch 9, gekennzeichnet durch eine Einrichtung zum Sichern der Verschraubeinrichtung (13) gegen Lösen.

11. Anordnung nach einem der Ansprüche 1 bis 7, 9 und 10, dadurch gekennzeichnet, daß die Bremsscheibe (3) und die Nabe (6) einstückig miteinander ausgeführt sind.

12. Anordnung zum Halten einer Radfelge (15) eines Rades mit Scheibenbremse (2, 3), bei der einerseits die Radfelge (15) drehfest und axial unverschieblich und andererseits die Scheibe (3) der Scheibenbremse (2, 3) drehfest und axial unverschieblich an einem zentralen Bauelement (11) angebracht sind, gekennzeichnet durch
eine Axialverzahnung (12) zwischen der Scheibe (3) und dem zentralen Bauelement (11) zur Drehsicherung,
einer ersten Axialsicherungseinrichtung (2O) zum Sichern der Scheibe (3) gegen eine Axialverschiebung in Richtung der Radfelge (15) und
eine zweite Axialsicherungseinrichtung (21, 22) zum Sichern der Scheibe (3) gegen eine Axialverschiebung der Scheibe (3) weg von der Radfelge (15).

13. Anordnung nach Anspruch 12, dadurch gekennzeichnet, daß die erste Axialsicherungseinrichtung eine Anlagefläche (2O) an dem zentralen Bauelement (11) beinhaltet.

14. Anordnung nach Anspruch 12 oder 13, dadurch gekennzeichnet, daß die zweite Axialsicherungseinrichtung eine Anlagefläche (21) an einem Drehlager (9) auf einer Achse (1) des Rades beinhaltet.

15. Anordnung nach Anspruch 12 oder 13, dadurch gekennzeichnet, daß die zweite Axialsicherungseinrichtung eine Anlagefläche (22) an dem zentralen Bauelement (11) beinhaltet.

16. Anordnung nach Anspruch 15, gekennzeichnet durch einen Anschlag, der mit dem zentralen Bauelement (11) verschraubt ist.

17. Anordnung nach Anspruch 15, gekennzeichnet durch einen Sicherungsring, der lösbar auf dem zentralen Bauelement (11) sitzt.

18. Anordnung nach einem der vorangehenden Ansprüche, gekennzeichnet durch eine Axialverschraubung (13) zum drehbaren Halten des zentralen Bauelements (11).
